# EUROPÄISCHE PATENTSCHRIFT

(11) **EP 0 288 785 B1**
(45) Veröffentlichungstag und Bekanntmachung des Hinweises auf die Patenterteilung: **23.06.1993**
(21) Anmeldenummer: 88105432.4
(22) Anmeldetag: 06.04.1988
(51) Int. Cl.: B22F 1/00, B22F 9/00, B22F 3/00

(54) **Verfahren zur Herstellung eines Werkstoffs mit einem Gefüge nanokristalliner Struktur**
Process for preparing a material with a nanocrystalline structure
Procédé de préparation de matériau ayant une structure nanocristalline

(30) Priorität: 29.04.1987 DE 3714239
(43) Veröffentlichungstag der Anmeldung: 02.11.1988
(73) Patentinhaber: Fried. Krupp AG Hoesch-Krupp, 45143 Essen (DE)
(72) Erfinder: Schlump, Wolfgang, Dr., D-4300 Essen 1 (DE)

(56) Entgegenhaltungen:
- EP-A- 0 154 548
- EP-A- 0 219 582
- EP-A- 0 232 772
- DE-A- 2 412 022
- GB-A- 1 298 944
- MATERIALS LETTERS, Band 5, Nr. 7-8, Juli 1987, Amsterdam (NL); F.PETZOLDT et al., Seiten 280-284#
- ZEITSCHRIFT FÜR METALLKUNDE, Band 75, Nr. 4, April 1984, München (DE); H.GLEITER et al., Seiten 263-267#
- PROCEEDINGS OF 4th JIM INTERNATIONAL SYMPOSIUM ON GRAIN BOUNDARY STRUCTURE AND RELATED PHENOMENA, 25-29 November 1985, Minakami, Suppl.: Transactions of the Japan Institute of Metals, Band 27, 1986, The Japan Institute of Metals, Sendai (JP); R.BIRRINGER et al., Seiten 43-52#

## Beschreibung

Die Erfindung bezieht sich auf ein Verfahren zur Herstellung eines Werkstoffs mit einem Gefüge nanokristalliner Struktur. Derartige Werkstoffe sind z.B. in den Vorveröffentlichungen von H. Gleiter und P. Marquart in der Zeitschrift "Metallkunde" 75 (4), 1984, S. 263 - 267, und von R. Birringer, U. Herr und H. Gleiter in Proc. JIMIS-4, Trans. of Jap. Inst. of Metals 27, 1986, S. 43 ff. beschrieben. Das Gefüge dieser Werkstoffe ist im wesentlichen dadurch gekennzeichnet, daß die Kristallite eine Größe von 1 bis 10 nm haben und dadurch der Volumenanteil der inkohärenten Grenzflächen vergleichbar ist mit dem Volumenanteil der kristallinen Bereiche. In den Grenzflächenbereichen weist die Anordnung der Atome im makroskopischen Mittel weder Fernnoch Nahordnung auf und besitzt also einen gasähnlichen Charakter. Dieses Gefüge stellt einen neuartigen Festkörperzustand dar.

In den zuvor erwähnten Druckschriften werden auch Verfahren zur Herstellung von nanokristallinen Pulvern und zu deren Verdichtung zu Formkörpern erläutert. Zu den am häufigsten benutzten Verfahren zur Pulverherstellung zählen: Zerstäuben im elektrischen Lichtbogen und Verdampfen in einer inerten Atmosphäre bzw. im Vakuum mit nachfolgender isoentroper Entspannung. Die Pulver werden in demselben Rezipienten in einer Preßmatrize gesammelt und verdichtet. Diese Verfahren sind für die Herstellung von Formkörpern mit nanokristallinem Gefüge in größeren Mengen sehr aufwendig ausgestaltet.

Die DE-A-2 412 022 beschreibt ein metallurgisches Herstellungsverfahren für bestimmte Legierungen, welches durch besonders feines Mahlen eine gleichbleibend gute Mischung von Dispersat und Metallpulver ermöglichen soll. Das Mahlergebnis besteht dabei darin, daß die eingesetzten Metalle und das eingesetzte Dispersat in zerkleinertem Zustand eine gute Mischung bilden, jedoch keinen Legierungsvorgang durchlaufen haben.

Aus "MATERIALS LETTERS", 5 (1987), Nos. 7/8, S. 280 - 284, Amsterdam, ist ein Verfahren bekannt, bei dem durch Mahlen des Ausgangsmaterials kristalline Lamellen erzeugt werden, die bereits nach einer Mahldauer von wenigen Stunden in eine amorphe Matrix eingebettet sind. Das bekannte Verfahren wird dabei derart ausgeführt, daß die kristallinen Lamellen nach einer Mahldauer von 40 Stunden eine Dicke zwischen 20 bis 40 nm aufweisen; diese nimmt mit fortschreitender Zeitdauer des Mahlvorgangs ab, so daß die Lamellen schließlich zerfallen und - der Aufgabenstellung entsprechend - ein amorphes Pulver vorliegt.

Aufgabe der Erfindung ist die Entwicklung eines Verfahrens, mit dem ein Werkstoff mit einem Gefüge nanokristalliner Struktur für eine bestimmte Werkstoffgruppe in größeren Mengen herstellbar ist und der in bekannter Weise zu Formkörpern verdichtet werden kann.

Die Aufgabe wird mit einem Verfahren nach Anspruch 1 oder 2 gelöst. Dabei werden Pulver in handelsüblichen Teilchengrößen zwischen 2 und 250 µm der ausgewählten Elemente in reiner Form oder als Vorlegierungen dieser Gruppen durch hohe mechanische Kräfte in ein Sekundärpulver mit nanokristalliner Struktur umgewandelt, dessen Pulverteilchen einen sehr hohen Raumerfüllungsgrad aufweisen.

Die hohen mechanischen Kräfte können auf unterschiedliche Weise zur Einwirkung gebracht werden. Insbesondere kann die erfindungsgemäße Umwandlung in ein Sekundärpulver mit nanokristalliner Struktur durch Mischen und Kaltverformen bzw. durch Mischen und Hochenergiemahlen der Ausgangspulver herbeigeführt werden (Anspruch 3 bzw. 4). Vorzugsweise wird das Hochenergiemahlen mit einem Attritor durchgeführt.
Aus dem Sekundärpulver lassen sich mittels konventioneller Verdichtungsverfahren der Pulvermetallurgie, wie Strangpressen, Pulverschmieden, Heißpressen, heißisostatisches Pressen, Sinterhippen und Sintern bei Temperaturen, die wesentlich unterhalb der Rekristallisationstemperatur liegen, Formkörper herstellen.

Zur Durchführung des erfindungsgemäßen Verfahrens werden die Werkstoffbestandteile in der Weise ausgewählt, daß ihr Legierungssystem eine ausgeprägte eutektische bzw. eutektoide Reaktion zeigt, und daß das Mischungsverhältnis außerhalb der Randlöslichkeit liegt.

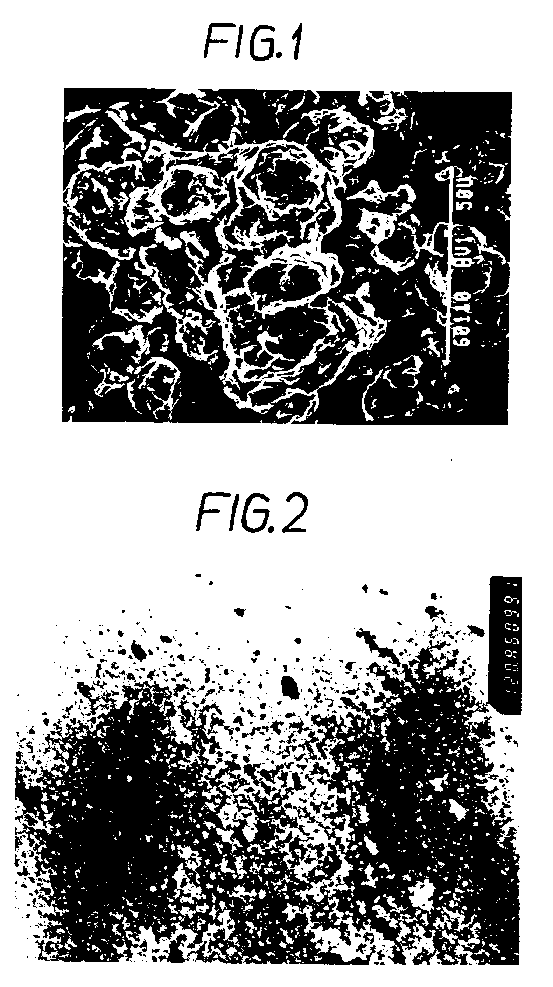

Die Erfindung wird nachfolgend unter Bezugnahme auf die Fig. 1 bis 4 der Zeichnung anhand zweier Ausführungsbeispiele erläutert.

In einem ersten Ausführungsbeispiel wird Ti-Pulver (mittlere Teilchengröße 70 µm) mit Ni-Pulver (mittlere Teilchengröße 5 µm) im Mengenverhältnis 70 : 30 gemischt und in einem horizontal liegenden Attritor gemahlen. Das Pulverchargengewicht beträgt 1000 g. Die Mahlung erfolgt unter Verwendung von Wälzlagerkugeln mit einem Durchmesser von ca. 6 mm, wobei das Massenverhältnis der Wälzlagerkugeln zum Pulver 20 : 1 und die Mahldauer bei einer Rührarmdrehzahl von 200 U/min. 90 Stunden beträgt. Aus Fig. 1 ist das Gefüge nanokristalliner Struktur - bestehend aus α Ti- und α Ni-Mischkristallen mit einer Korngröße vorzugsweise ≦10 nm - des entstandenen Sekundärpulvers ersichtlich. Der Raumerfüllungsgrad beträgt mindestens 90 %.

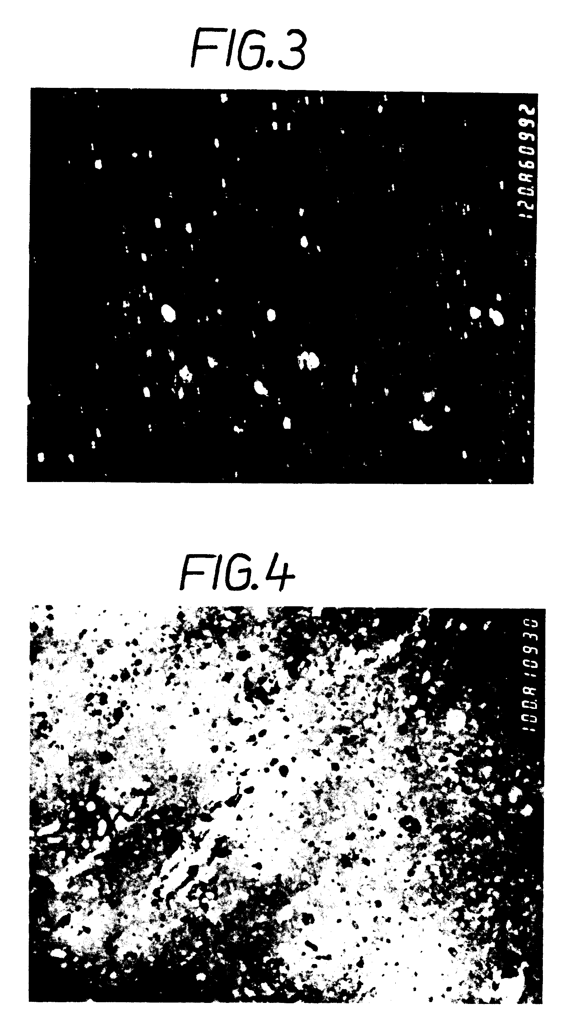

Dieses Sekundärpulver wird bei Temperaturen bis zu 500°C und 2000 bar unter Argon-Atmosphäre eine Stunde lang heiß-isostatisch zu einem Formkörper gepreßt, dessen nanokristalline Struktur aus den Fig. 2 und 3 ersichtlich ist.

In einem weiteren Ausführungsbeispiel wird eine Nickelbasislegierung APK 1 (deren Bestandteile und Zusammensetzung sich aus der nachfolgenden Tabelle ergeben) in Pulverform (mittlere Teilchengröße 60 µm) mit 6 % Zirkonpulver gemischt und unter den Bedingungen des ersten Ausführungsbeispiels gemahlen und verdichtet. Fig. 4 zeigt das Gefüge nanokristalliner Struktur des dabei gebildeten Formkörpers.

| Chemische Analyse von APK 1 (Angabe in Massen-%) | | | | | |
|---|---|---|---|---|---|
| Cr | Mo | Co | Al | Ti | Ni |
| 15,0 | 5,2 | 17,1 | 4,0 | 3,5 | Rest |

Mit ähnlichen Prozeßparametern können auch TiCr, NiZr sowie Werkzeugstahl mit Ti-Carbid und/oder Nb-Carbid mechanisch in ein Sekundärpulver mit einem Gefüge nanokristalliner Struktur umgewandelt und zu Formkörpern verarbeitet werden.

## Patentansprüche

1. Verfahren zur Herstellung eines Werkstoffs mit einem Gefüge nanokristalliner Struktur aus binären oder quasibinären Stoffen bestehend aus mindestens einem der Elemente Y, Ti, Zr, Hf, Nb, Mo, Ta und W mit mindestens einem der Elemente V, Cr, Mn, Fe, Co, Ni, Cu und Pd, wobei die ausgewählten Elemente in reiner Form oder als Vorlegierungen als Pulver mit Teilchengrößen von 2 bis 250 µm gemischt und zum Erreichen eines Sekundärpulvers mit nanokristalliner Struktur hohen mechanischen Kräften ausgesetzt werden.

2. Verfahren zur Herstellung eines Werkstoffs mit einem Gefüge nanokristalliner Struktur aus binären oder quasibinären Stoffen bestehend aus mindestens einem der Elemente Y, Ti, Zr, Hf, Nb, Mo, Ta und W mit mindestens einem der Elemente V, Cr, Mn, Fe, Co, Ni, Cu und Pd, und mindestens einem Begleitelement wie Si, Ge, B und/oder Oxiden, Nitriden, Boriden, Carbiden, sowie deren möglichen Mischkristallen, wobei die Bestandteile in reiner Form oder als Vorlegierungen als Pulver mit Teilchengrößen von 2 bis 250 µm gemischt und zum Erreichen eines Sekundärpulvers mit nanokristalliner Struktur hohen mechanischen Kräften ausgesetzt werden.

3. Verfahren nach den Ansprüchen 1 bis 2, dadurch gekennzeichnet, daß das Sekundärpulver durch Mischen und Kaltverformen der Ausgangspulver gewonnen wird.

4. Verfahren nach den Ansprüchen 1 bis 2, dadurch gekennzeichnet, daß das Sekundärpulver durch Mischen und Hochenergiemahlen der Ausgangspulver gewonnen wird.

## Claims

1. A process for the production of a material having a texture of nanocrystalline structure from binary or quasi-binary substances comprising at least one of the elements Y, Ti, Zr, Hf, Nb, Mo, Ta and W with at least one of the elements V, Cr, Mn, Fe, Co, Ni, Cu and Pd, wherein the selected elements are mixed in the pure form or in the form of key alloys as powder having a particle size of 2 to 250 µm and subjected to high mechanical forces to obtain a secondary powder of nanocrystalline structure.

2. A process for the production of a material having a texture of nanocrystalline structure from binary or quasi-binary subtances comprising at least one of the elements Y, Ti, Zr, Hf, Nb, Mo, Ta and W with at least one of the elements V, Cr, Mn, Fe, Co, Ni, Cu and Pd and at least one accompanying element, such as Si, Ge, B and/or oxides, nitrides, borides, carbides and their possible mixed crystals, wherein the selected elements are mixed in the pure form or in the form of key alloys as powder having a particle size of 2 to 250 µm and subjected to high mechanical forces to obtain a secondary powder of nanocrystalline structure.

3. A process according to claims 1 and 2, characterized in that the secondary powder is obtained by the mixing and cold forming of the initial powder.

4. A process according to claims 1 and 2, characterized in that the secondary powder is obtained by the mixing and high energy grainding of the initial powder.

## Revendications

1. Procédé de préparation d'un matériau ayant une structure nanocristalline, formé de matières binaires ou quasibinaires, constitué d'au moins un des éléments Y, Ti, Zr, Hf, Nb, Mo, Ta et W, avec au moins un des éléments V, Cr, Mn, Fe, Co, Ni, Cu et Pd, dans lequel les éléments choisis sont mélangés sous forme pure ou en tant qu'alliage préalable, sous forme de poudre, avec des tailles de particules de 2 à 250 µm, et sont soumis à des forces mécaniques élevées pour obtenir une poudre secondaire de structure nanocristalline.

2. Procédé de préparation d'un matériau ayant une structure nanocristalline, formé de matières binaires ou quasibinaires, constitué d'au moins un des éléments Y, Ti, Zr, Hf, Nb, Mo, Ta et W, avec au moins un des éléments V, Cr, Mn, Fe, Co, Ni, Cu et Pd, et au moins un oligo-élément tel que Si, Ge, B et/ou des oxydes, nitrures, borures, carbures, ainsi que leurs éventuels cristaux mixtes, dans lequel les éléments choisis sont mélangés sous forme pure ou en tant qu'alliage préalable, sous forme de poudre, avec des tailles de particules de 2 à 250 µm, et sont soumis à des forces mécaniques élevées pour obtenir une poudre secondaire de structure nanocristalline.

3. Procédé selon les revendications 1 et 2, caractérisé en ce que la poudre secondaire est obtenue par mélange et formage à froid de la poudre de départ.

4. Procédé selon les revendications 1 et 2, caractérisé en ce que la poudre secondaire est obtenue par mélange et broyage très énergique de la poudre de départ.
